(19) Europäisches Patentamt / European Patent Office / Office européen des brevets

(11) **EP 4 063 899 A1**

(12) **EUROPEAN PATENT APPLICATION**

(43) Date of publication:
**28.09.2022 Bulletin 2022/39**

(51) International Patent Classification (IPC):
$G01S\ 7/48^{(2006.01)}$ $\qquad$ $G01S\ 7/4865^{(2020.01)}$
$G01S\ 7/487^{(2006.01)}$ $\qquad$ $G01S\ 17/04^{(2020.01)}$
$G01S\ 17/66^{(2006.01)}$ $\qquad$ $G01S\ 7/497^{(2006.01)}$

(21) Application number: **22161244.3**

(22) Date of filing: **10.03.2022**

(52) Cooperative Patent Classification (CPC):
**G01S 7/4865; G01S 7/4808; G01S 7/487;
G01S 17/04; G01S 17/66;** G01S 7/497

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **25.03.2021 FR 2103003**

(71) Applicant: **STMICROELECTRONICS SA
92120 Montrouge (FR)**

(72) Inventors:
• **POTHIER, Olivier
92330 SCEAUX (FR)**
• **MACELA, Victor
75006 PARIS (FR)**
• **LEBIHEN, Thierry
92340 BOURG-LA-REINE (FR)**
• **BOURGE, Arnaud
75013 PARIS (FR)**

(74) Representative: **Casalonga
Casalonga & Partners
Bayerstraße 71/73
80335 München (DE)**

(54) **ANTI FLICKER FILTER FOR DTOF SENSOR**

(57) Method, comprising
-detecting from a first histogram signal delivered by a sensor device, successive sets of targets at respective successive instants,
-determining for a current set of current detected targets, a current histogram output, said current histogram output comprising for each current detected target of said current set, a current group of parameters stored in a memory including a confidence indicator,
-performing a matching operation between said current set of detected targets and previous sets of detected targets stored in said memory, and
-performing a filtering operation of at least one parameter of the current group of parameters of at least some of the current detected targets of the current set, on the basis of the result of the matching operation, said filtering operation being weighted on the basis of at least the confidence indicators of current and previous sets of detected targets.

FIG.1

EP 4 063 899 A1

**Description**

Some embodiments of the disclosure relate to "Time of Flight" (ToF) devices (either dToF : direct Time of Flight or iToF : indirect Time of Flight devices), and more particularly to the filtering of flickering.

An advantageous application is a range estimation for AutoFocus Assist.

Devices for determining the distance (or range) to objects or targets are known. One currently used method is called "Time of Flight" (ToF). This method comprises sending a light signal towards the object and measuring the time taken by the signal to travel to the object and to travel back to the device.

dToF (direct Time of Flight) devices measure directly the time taken by the signal to travel to the object and to travel back to the device.

iToF (indirect Time of Flight) devices calculate the time taken by the signal for this travel by measuring the phase shift between the signal coming out of the light source and the signal reflected from the object and detected by a light sensor. Knowing this phase shift and the speed of light enables the determination of the distance to the object.

Single photon avalanche diodes (SPAD) may be used as a detector of reflected light. In general, an array of SPADs is provided as a sensor in order to detect a reflected light pulse. A photon may generate a carrier in the SPAD through the photo electric effect. The photo generated carrier may trigger an avalanche current in one or more of the SPADs in an SPAD array. The avalanche current may signal an event, namely that a photon of light has been detected.

Time-of-Flight histogram processing aims at detecting objects (targets) in the Field-of-View of the device and providing an estimation of their distances to the sensor.

This processing (Histogram Pipe "HIP") is embedded into the ToF sensor firmware (FW).

It can be used by a SmartPhone to drive its Camera AutoFocus.

The HIP uses for example a statistical hypothesis test to determine the presence of potential targets in the field of view : it is the role of a Pulse Segmenter ("PS") or pulse detector.

The PS finds statistically significative pulses in the Histograms reported by the hardware (HW) of the ToF (for example dToF) sensor.

Due to the statistical nature of this detection process and the Photonic noise, targets can "flicker", i.e. they can be detected at one instant, then lost at the next one, then come back...

The flicker is inherent to the technology.

Flicker is a temporal effect when the signal bounced by the target is close to the detectability threshold because:

The target is far away
The target reflectance is low
The target is only covering a small part of the Field of View (FoV) (of one sensor's zone)
This a flicker of type 1.

Some other types of Flicker may occur:

"Competition" of several targets with equivalent signals when one only has to be reported (type 2)
Close targets can be reported successively either as separated or merged (type 3)

Several tracks have been followed to reduce the Flicker effects:

- a first track tries to avoid the issue by avoiding statistical detection when not required. It is however not possible in all cases because AutoFocus requires target distance identification.
- a second track tries to face the issue by using a hysteresis filter (dynamic adaptation of the PS threshold). It reduces the temporal effect but does not remove it. The "curse of Threshold" remains. It does not solve Flickers of Types greater than 1. Further a latency is introduced.
- a third track tries to face the issue by using and exploiting spatial correlation. But it is not possible in all cases, for example for Single Zone Sensor, and there is further a loss in (X,Y) resolution.

According to embodiments it is proposed a flicker filtering method and system having the following advantages:

Benefit of HW tight coupling for target confidence computation (done in the FW)
The Anti Flicker Filter (AFF) allows to drastically reduce the flicker at the output of the Histogram Pipe
It keeps the latency to a reasonable level
Tunable trade-off between the stability and the latency
It handles smoothly multiple targets
It helps (side benefit) to detect False Long Tail targets

It does not reduce the spatial resolution (nor makes assumption on the scene).

According to embodiments it is proposed to

- use of a confidence measure on the detected targets. This confidence measure is advantageously computed within the HIP, in FW, using HW histograming counters,
- perform a temporal filtering (for taking into account the temporal effect of the flickering) with a "short term" memory (Direct part) and a "long term" memory (Feedback part),
- use weights of the filter having a dynamic and double influence and giving more importance to more recent past than older (temporal influence) and give more importance to more confident data (confidence influence),
- deal with missing targets for "filling" the holes in the filter input taking into account the previous confidence on the target,
- perform a potential Targets database (memory) management, using an "Affinity" criterion to cope with multiple targets.

According to an aspect, a method is proposed, comprising

- detecting from a first histogram signal (raw histogram) delivered by a sensor device, successive sets of targets at respective instants,
- determining for a current set of current detected targets, a current histogram output, said current histogram output comprising for each current detected target of said current set, a current group of parameters stored in a memory including a confidence indicator,
- performing a matching operation between said current set of detected targets and previous sets of detected targets stored in said memory, and
- performing a temporal filtering operation of at least one parameter of the current group of parameters of at least some of the current detected targets of the current set, on the basis of the result of the matching operation, said temporal filtering operation being advantageously weighted on the basis of at least the confidence indicators of current and previous sets of detected targets.

The temporal filtering operation may be performed for example, but not limitatively, by using a IIR filter (i.e. the parameters in the memory may be obtained from previous input targets or from previously filtered output ones).
Other types of filters may be used, for example a FIR filter.
The confidence indicator of a current detected target may be based on the Z-score of the target in the first histogram signal (raw histogram).
According to an embodiment, a current group of parameters further includes a rate, an ambient rate and a distance (range).
According to an embodiment, said matching operation comprises using an affinity condition.
According to an embodiment, said affinity condition comprises a condition based on distance (range).
According to an embodiment, said affinity condition comprises a condition based on rate.
According to an embodiment, said affinity condition comprises a condition based on the confidence indicator.
According to an embodiment, said affinity condition comprises an affinity-based distance matrix.
According to an embodiment, a current detected target matches one previous target stored in the memory at the end of the matching operation.
According to an embodiment, a current detected target does not match any previous target stored in the memory at the end of the matching operation.
In such a case, said current detected target may be added to the memory if empty slots are available.
As a variant, a selective memory replacement may be performed based on the confidence indicators for storing said current detected target.
According to an embodiment, a previous target in the memory is not matched in the current set of detected targets, and a new target (« virtual » target) is added to the input of the filtering operation with a new confidence indicator.
The new confidence indicator may be very low if one was very confident on its corresponding previous target.
The new confidence indicator may be close to the previous confidence indicator if said previous confidence indicator was low.
According to an embodiment, the method comprises a double weighted filtering operation based on the target parameters and the confidence indicator.
The sensor device may comprise a ToF device, in particular a dToF device.
According to another aspect, a system is proposed, comprising

- a sensor device configured to deliver a first histogram signal permitting to detect successive sets of targets at respective successive instants,

- first processing means configured to determine, for a current set of current detected targets, a current histogram output, said current histogram output comprising for each current detected target of said current set, a current group of parameters stored in a memory including a confidence indicator,
- second processing means configured

o to perform a matching operation between said current set of detected targets and previous sets of detected targets stored in said memory, and

o to perform a temporal filtering operation of at least one parameter of the current group of parameters of at least some of the current detected targets of the current set, on the basis of the result of the matching operation, said temporal filtering operation being advantageously weighted on the basis of at least the confidence indicators of current and previous sets of detected targets.

The different features indicated above for the different embodiments of the method defined above may be incorporated to different embodiments of said system.

More precisely:

according to an embodiment the confidence indicator of a current detected target is based on a Z-score of the target in the first histogram signal;

according to an embodiment a current group of parameters further includes a rate, an ambient rate and a distance (range);

according to an embodiment said matching operation comprises using an affinity criterion;

according to an embodiment said affinity criterion comprises a condition based on distance;

according to an embodiment said affinity criterion comprises a condition based on rate;

according to an embodiment said affinity criterion comprises a condition based on the confidence indicator;

according to an embodiment said affinity criterion comprises an affinity based distance matrix;

according to an embodiment a current detected target matches one previous target stored in the memory at the end of the matching operation;

according to an embodiment a current detected target does not match any previous target stored in the memory at the end of the matching operation;

according to an embodiment said current detected target is added to the memory if empty slots are available;

according to an embodiment a selective memory replacement is performed based on the confidence indicators for storing said current detected target;

according to an embodiment a previous target in the memory is not matched in the current set of detected targets, and a new target (« virtual » target) is added to the input of the filtering operation with a new confidence indicator;

according to an embodiment the new confidence indicator is very low if one was very confident on its corresponding previous target;

according to an embodiment the new confidence indicator is close to the previous confidence indicator if said previous confidence indicator was low;

according to an embodiment the second processing means comprise a double weighted filter based on the target parameters and the confidence indicator.

Further according to a preferred embodiment, the first processing means and the second processing means may be implemented as firmware.

As a variant, the first processing means comprises a first module configured to determine the confidence indicators and a second module configured to determine the other parameters, the first module and the second processing means being implemented as software and the second module being implemented as firmware.

The sensor device may comprise a ToF device, in particular a dToF device.

Other advantages and features of the invention will appear in the detailed description below and in the appended drawings which are not limitative, in which:

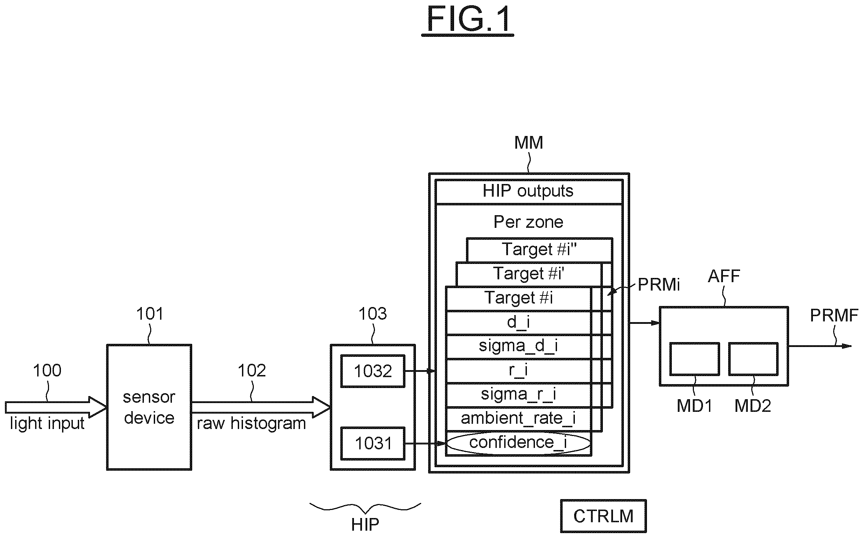

Figures 1 to 16 illustrate diagrammatically embodiments of the invention.

In Figure 1 a schematic view of an example system is shown.

In the example shown in Figure 1 the system comprises a sensor device 101 which is configured to receive a light input 100 coming back from an object after reflection of an incident signal on said object, and is configured to output a first histogram signal 102 ('raw' histogram data) which is passed to first processing means 103.

The sensor device is here a multiple zones sensor.

The first histogram signal permits to detect successive sets of targets at respective successive instants.

The first processing means 103 form a histogram pipe HIP and are configured to determine, for a current set of current detected targets Target#i, Target#i', Target#i" a current histogram output.

Said current histogram output comprises for each current detected target (Target#i for example) of said current set, a current group of parameters PRMi stored in a memory MM.

The group of parameters PRMi includes in particular

- a distance or range, d_i, representing the distance between the sensor device and an object within the 'field-of-view' (FoV) of the sensor device,
- a rate, r_i,
- an ambient rate, ambient_rate_i, and
- a confidence indicator, confidence_i.

The first processing means 103 comprises a first module 1031 for determining the confidence indicators advantageously in firmware (FW), using hardware (HW) histograming counters.

The first processing means 103 comprises also a second module 1032 for determining the other parameters sigma_d_i, sigma_r_i which are the standard deviations of d_i and r_i, respectively.

The system comprises also second processing means AFF configured

o to perform a matching operation between said current set of detected targets and previous sets of detected targets stored in said memory MM, and

o to perform a temporal filtering operation of at least one parameter of the current group of parameters of at least some of the current detected targets of the current set, on the basis of the result of the matching operation, said temporal filtering operation being advantageously weighted on the basis of at least the confidence indicators.

The second processing means AFF deliver filtered parameters PRMF and are configured to process the flickering effect.

More precisely, the second processing means comprises a first block MD1 configured to perform the matching operation and a second block MD2 configured to perform the filtering operation. The second block may be considered as being a filter also called « anti flicker filter ».

The system may comprise also control means CTRLM, for example realized by software, configured to control the first and second processing means.

The sensor device 101 and the second module 1032 may be those described in US2018/0253404A1, which is hereby incorporated herein by reference.

Some features of the sensor device 101 and the second module are now detailed and the man skilled in the art can refer to US2018/0253404A1 for all useful purposes.

The sensor device 101 may comprise a light source (such as a vertical cavity surface emitting laser VCSEL or light emitting diode LED), a suitable light source driver, an array of single photon avalanche diode (SPAD) elements and a time to distance converter (TDC) or histogram generator configured to output the 'raw' histogram signal or data 102 representing photon event detection counts for a number of time bins.

However other configurations may be implemented such as the sensor device comprising a light source, light source driver + a fast photodiode detector with steered charge, an analogue to digital converter (ADC) etc.

The sensor device 101 may for example comprise a generator/driver configured to provide a periodic electric signal (the periodic signal may for example be a square shaped signal or a sine shaped signal or any suitable periodic signal). The generator/driver may furthermore power the light source thus generating a 'modulated' light output.

An example of a light source may be a light emitting diode, or any known lighting device, for example, a laser diode. The signal coming out of the light source is the incident transmitted towards an object and is reflected by the object.

The reflected light signal (light input 100 of figure 1) is detected by the sensor of the device 101, which in the following examples comprises an array of SPADs. The SPAD array may integrate several photo detection elements in the form of Single-photon avalanche diodes, or "SPADs" also called Geiger mode avalanche photodiodes. These devices have a reverse biased p-n junction in which a photo-generated carrier can trigger an avalanche current due to an impact ionization mechanism. SPADs may be designed to operate with a reverse bias voltage well above the breakdown voltage.

At an initial time, the diode is biased to a voltage larger than its breakdown voltage. The reception of a photon in the diode junction area starts an avalanche in the diode, which creates an electric pulse. The diode is then biased back to a voltage smaller than the breakdown voltage, so that the SPAD reacts again to the reception of a photon. SPADs can currently be used in cycles having reactivation periods shorter than 10 ns. Thereby, SPADs can be used at high frequency to detect objects at relatively short distances from the measurement device, for example, distances ranging from a few millimeters to several meters. In different embodiments, different ranges may be supported.

Such detection elements may also be rapid charge transfer photodiodes. The signal output by the sensor is thus phase-shifted from the signal provided by the generator/driver by an angle which correlates with the distance to the object.

A Time to Digital Converter (TDC) may be configured to receive the signals generated by generator/driver and by the sensor and calculate the phase shift (or time difference) between these signals to obtain a distance to object. The detector (SPAD array) is configured to generate many fast readings in a short time period and thus the time to distance converter may be configured to generate a histogram of detected events. For example, with a periodic pulsed system, the detected event arrival instants may be quantized to build up histogram data which may be post processed to identify the position/distance of multiple targets within the Field of View.

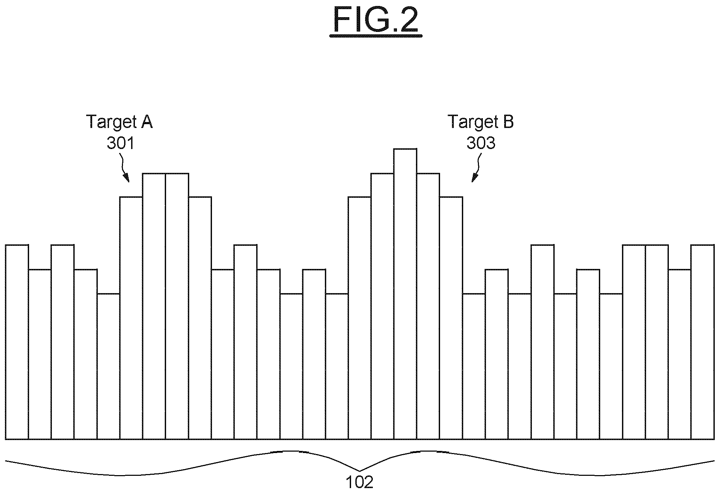

An example of a first generated histogram (raw histogram) 102 may be shown in Figure 2. The example histogram data 102 is shown as a series of bars each bar representing a detected event frequency or event count for specific time bins or intervals. In the example shown in Figure 2 two targets 'reflections' can be seen. The first target A 301 is shown as a peak above an ambient level which occurs earlier than a second target B 303 peak.

In some embodiments, a further reference detector within the sensor device is used. The reference detector is configured to receive the light emitted by the light source, and is close to the light source. The distance to the object may be determined using the timing difference between the reference detector receiving the light from the light source and the sensor receiving the light from the reflected object.

The histogram data based distance determination analysis and filtering as shown hereafter is applicable to any time of flight ranging application such as gesture analysis where the range output may be used as an input to algorithms to detect motion of a hand or other object to control an interface, and auto-focus assist where the range output may be used as a guide for an auto-focus scheme to speed up camera focus time.

In some embodiments the first processing means 103 can be physically integrated with the sensor device 101. In other words the processing device is implemented in the same device as the sensor device, for example by using register transfer level (RTL) synthesis or within an on-board microcontroller unit (MCU) on the sensor device.

In some embodiments the first processing means 103 can be logically integrated with the sensor device 101 but is implemented on a separate, dedicated processing device.

In some further embodiments the first processing means 103 can be implemented as software on a host device configured to receive the output from the sensor device 101.

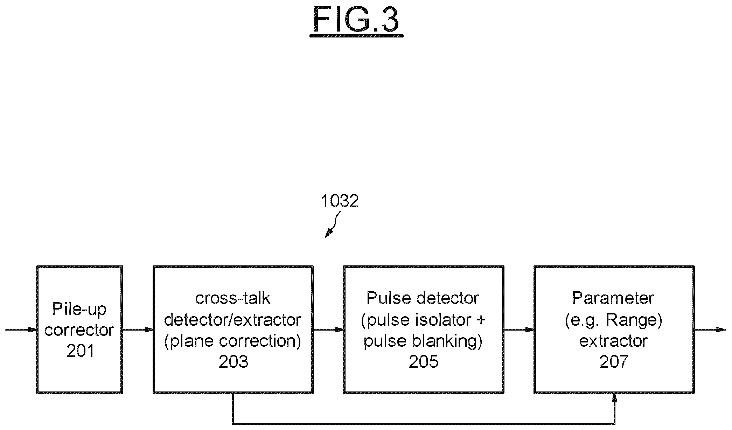

As shown in Figure 3 the second module 1032 of the first processing means 103 may comprise various processing modules which may process the raw histogram data. In some embodiments the second module 1032 comprises some but not all of the processing modules described hereafter.

For example, as shown in Figure 3 the second module 1032 may comprise a pile-up corrector 201. The pile-up corrector 201 in some embodiments may be configured to receive the raw histogram data from the sensor device 101 and process the data to attempt to correct for pile-up errors in the histogram data.

The corrected histogram data may in some embodiments be further passed to a cross-talk detector 203 (but in some embodiments may pass the corrected data to the pulse detector and/or parameter extractor).

The cross-talk detector 203 may be configured to receive the output of the pile-up corrector 201 (or in some embodiments where there is no pile-up corrector 201 receive the raw histogram data directly).

The cross-talk detector 203 may thus determine whether the histogram data comprises cross-talk components and furthermore attempt to at least partially remove these components.

The cross-talk detector 203 may furthermore output the corrected histogram data to the pulse detector or pulse segmenter (PS) 205 and/or parameter extractor 207.

The pulse detector or pulse segmenter 205 may be configured to receive the output of the cross-talk detector 203 (or the pile-up corrector 201) and be configured to detect and filter (or isolate or blank) pulses within the histogram data. The operation of the pulse detector is described in further detail later in the application. These determined pulses may be passed to the parameter extractor 207.

The parameter extractor 207 may be configured to receive the output of the cross-talk detector 203 and/or the pulse detector 205 and may be configured to extract suitable parameters, such as range from the detected pulses within the histogram data. These parameters may be output.

The first module 1031, configured to determine the confidence indicators is advantageously coupled to the output of the cross-talk detector/extractor 207 and linked to the pulse segmenter 205.

The confidence indicator of a target may be based on the Z-score of this target in the raw histogram 102.

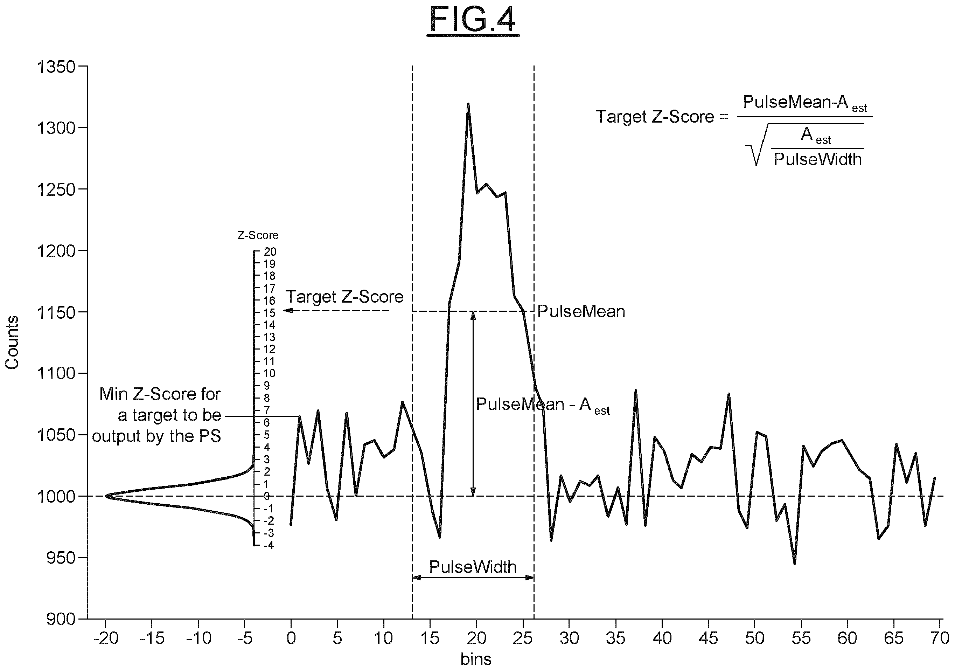

The determination of the Z-score of a target, Target Z-Score, is more particularly illustrated in figure 4.

In figure 4, the Pulse Segmenter detects the pulse reflected by the target.

There is only one pulse detected by the Pulse Segmenter for this target in figure 4.

More generally, it is quite rare that the Pulse Segmenter detects more than one pulse for the same real target (this may however happen for a slanted target). And for the Pulse Segmenter, each pulse it detects "is" a target, for which a Target Z-score will be computed.

PulseWidth is the number of time bins constituting the detected pulse according to the pulse boundaries determined by the Pulse Segmenter.

For the calculation of the Target Z-Score, one considers the average of the event detection counts due to ambient light photons over the time bins constituting the detected pulse.

This average follows a probability law (e.g. a Gaussian law) whose mean is Aest and standard deviation is the square root of the division of Aest by PulseWidth.

$A_{est}$, called the "ambient per bin", is the estimated mean of the event detection counts per time bin due to ambient light photons.

The probability density function of this probability law is shown in figure 4, with Aest equal to 1000 counts

The Target Z-score is the Z-score (also called the standard score) of PulseMean relatively to this probability law, where PulseMean is the average of the event detection counts over the time bins constituting the detected pulse.

PulseMean - Aest is the average target signal (the average useful signal). It is the estimated average of the event detection counts per time bin due to the reflection on the target of the photons emitted by the light source making part of the device.

Thus, the Target Z-score indicates how far the average target signal is above the standard deviation of the noise (the ambient light level).

The Target Z-score is a good indicator of the ability of the Pulse Segmenter to detect the target since the Pulse Segmenter threshold is the minimum Z-score that a target must have to be output by the Pulse Segmenter.

The confidence indicator is an estimate of the correctness of some of the parameters (in particular the range) in the group of the target parameters PRM. The confidence indicator of a target may be the value of the Z-score of the target. It may also be the estimated detection rate of the target computed from the Gauss error function (erf) taking as input the Z-score of the target.

As a variant, the Z-score of a target can be computed as HIP postprocessing in the form of software on a host device, from the group of parameters PRM of the target, the cross-talk rate, the size of the pulse of the target, the effective SPAD count and some system timing parameters. In this variant, the confidence indicator is derived as HIP postprocessing from the Z-score.

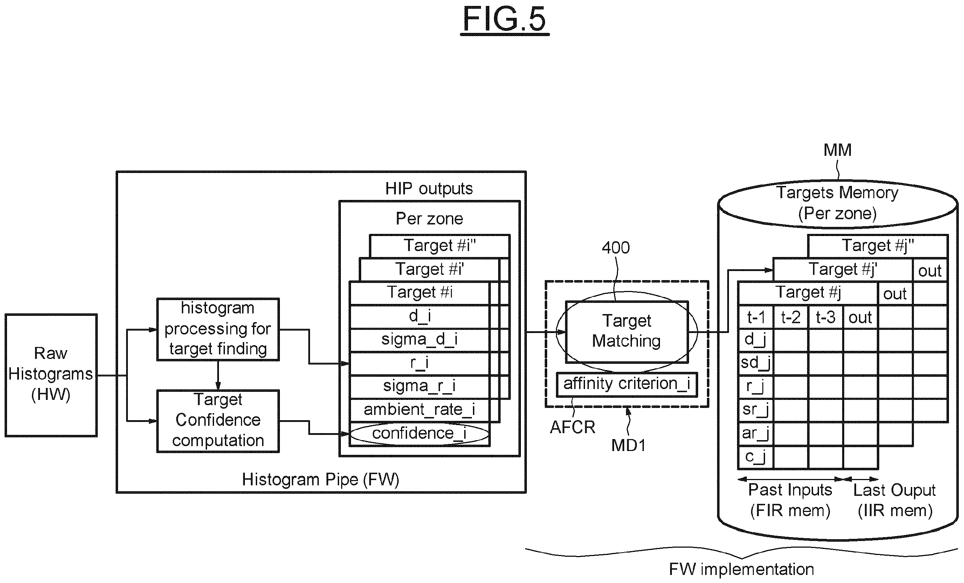

We refer now more particularly to figures 5 and following for describing embodiments and operation of the second processing means AFF.

As indicated above and illustrated in figure 5, the first block MD1 of the second processing means AFF, implemented here in the firmware FW, is configured to perform, per zone of the sensor device, a matching operation 400 between a current set of detected targets Target#i, Target#i', Target#i" and previous sets of detected targets Target#j, Target#j', Target#j" stored in said memory MM.

In the right part of figure 5, sd_j means sigma_d_j, sr_j means sigma_r_j, ar_j means ambient_rate_j and c_j means confidence_j.

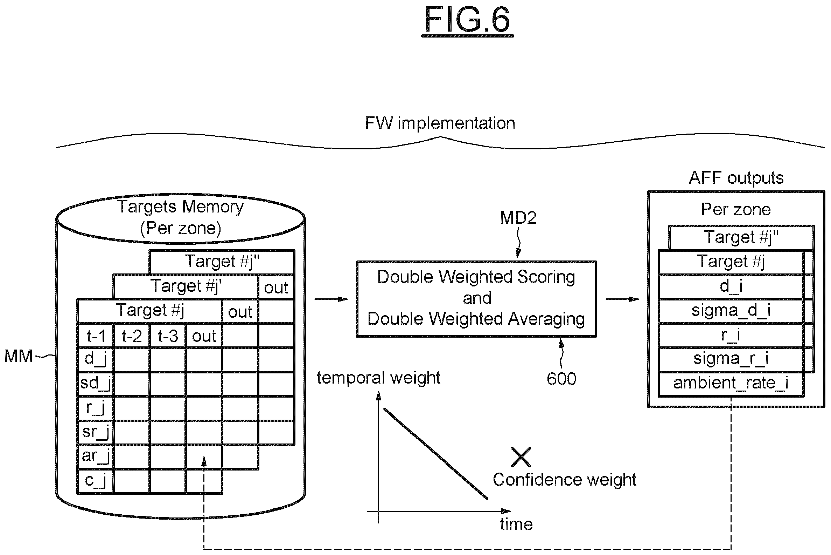

Then, as illustrated diagrammatically in figure 6, the second block MD2 of the second processing means AFF, implemented here in the firmware FW, is configured to perform a temporal filtering operation 600 of at least one parameter of the current group of parameters of at least some of the current detected targets of the current set, on the basis of the result of the matching operation, said temporal filtering operation being advantageously weighted on the basis of at least the confidence indicators.

The second block MD2 of the second processing means AFF deliver the filtered parameters PRMF and is configured to process the flickering effect.

In other words, for performing the temporal filtering operation, the second block MD2 implements the anti flicker filter and figure 6 shows a double weighting operation performed by the anti flickering filter MD2 of the second processing means AFF.

Examples of target matching performed by the first block MD1 of the second processing means AFF, will be now described more in details.

Matching current set of targets with the one in memory permits to handle multiple targets without "averaging" everything into nonsense output.

Generally speaking, the matching operation comprises matching the current targets Target#i, more simply called $T_i$, with all past realizations (history) of the targets stored in memory MM: $\overline{T_J} = \{T_j(t - 1), ..., T_j(t - m)\}$, where $\overline{T_J}$ being the previous targets Target#j, stored in memory MM at instants t-1 ,... ..., t-m.

As illustrated in figure 5, the matching 400 uses an affinity criterion or function AFCR.

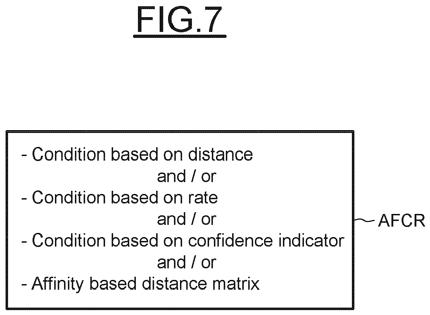

Affinity criterion requirements may be the following (figure 7):

- Proximity in range, potentially considering the range sigma (standard deviation), sigma_r_i,
- Proximity in rate, potentially considering the rate sigma (standard deviation), sigma_r_i
- Potentially considering their respective confidence, confidence_i

No affinity (infinite affinity value) is returned when proximity/ies exceed/s chosen reasonable value/s.

The man skilled in the art will be able to choose these reasonable values.

For example, these reasonable values may be chosen on the basis of experiments in a controlled environment (for example bench sweeps in a "dark" room) with multiple targets, determining the thresholds relative to the different target parameters allowing to discriminate these targets.

When the affinity function is based on range, we can use the non-linear function:

$$\Delta_{\text{Th}}^{\text{p}}(a,b) = \begin{cases} |a-b|^p & \text{if } |a-b| \leq \text{Th} \\ \infty & \text{if } |a-b| > \text{Th} \end{cases}$$

This function corresponds to a distance.

When p=2 and the threshold Th is infinite, this distance is the square of the Euclidian distance.

Other embodiments are possible:
Th could be set depending on the pulse width and/or the sigmas (standard deviations).

The Start and End of pulses (in bins) as detected by the pulse segmenter PS could be used to derive an alternative overlap-based distance.

Affinity in rates can also be used, balancing the proximity in ranges d and in rates r by $\beta$

$$\text{Aff}_{p,\text{Th}}(T_i, \overline{T_j}) = \beta \sum_{k=1}^{m} \Delta_{\text{Th}_d}^{p}(d_i, \overline{d_j}) + (1-\beta) \sum_{k=1}^{m} \Delta_{\text{Th}_r}^{p}(r_i, \overline{r_j})$$

In the formula above, $(d_i, \overline{d_j})$ are the ranges respectively associated to the current target $T_i$ and the previous target $\overline{T_j}$, and $(r_i, \overline{r_j})$ are the rates respectively associated to the current target $T_i$ and the previous target $\overline{T_j}$.

An Affinity based distance matrix $\text{Aff}_{p,\text{Th}}(t)$ may thus be used for the affinity criterion AFCR in the matching process:

$$\text{Aff}_{p,\text{Th}}(t) = \begin{bmatrix} \text{Aff}_{p,\text{Th}}(T_1, \overline{T_1}) & \cdots & \text{Aff}_{p,\text{Th}}(T_1, \overline{T_{J(t)}}) \\ \vdots & \text{Aff}_{p,\text{Th}}(T_i, \overline{T_j}) & \vdots \\ \text{Aff}_{p,\text{Th}}(T_{I(t)}\overline{T_1}) & \cdots & \text{Aff}_{p,\text{Th}}(T_{I(t)}, \overline{T_{J(t)}}) \end{bmatrix}$$

Where:

$I(t)$ is the number of targets output by the histogram pipe (figure 5) at instant $t$

$J(t)$ is the number of valid targets stored in the memory MM at instant $t$

A suited matching algorithm may be used (the Gale-Shapley algorithm) to best fit current targets with the ones in memory.

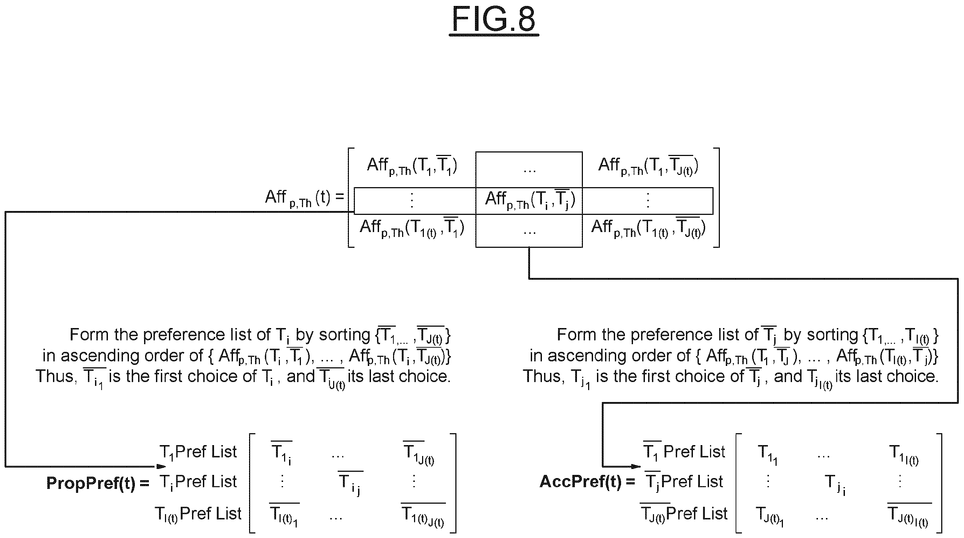

From the affinity matrix $\text{Aff}_{p,\text{Th}}(t)$, a proposers' preference matrix PropPref($t$) and an accepters' preference matrix AccPref($t$) are built (figure 8).

The "proposers" are the targets output by the histogram pipe at instant $t$: $\{T_1, ..., T_{I(t)}\}$

The "accepters" are the valid targets stored in memory MM at instant $t$: $\{\overline{T_1}, ..., \overline{T_{J(t)}}\}$

Building the proposers' preference matrix PropPref($t$) ,i.e. forming the preference list of $T_i$, comprises sorting $\{\overline{T_1}, ..., \overline{T_{J(t)}}\}$ in ascending order of $\{\text{Aff}_{p,\text{Th}}(T_i, \overline{T_1}), ..., \text{Aff}_{p,\text{Th}}(T_i, \overline{T_{J(t)}})\}$. Thus, $\overline{T_{i1}}$ is the first choice of $T_i$, and $\overline{T_{iJ(t)}}$ its last choice.

Building the accepters' preference matrix AccPref($t$), i.e. forming the preference list of $\overline{T_J}$, comprises sorting $\{T_1, ..., T_{I(t)}\}$ in ascending order of $\{\text{Aff}_{p,\text{Th}}(T_1, \overline{T_J}), ..., \text{Aff}_{p,\text{Th}}(T_{I(t)}, \overline{T_J})\}$ Thus, $T_{j1}$ is the first choice of $\overline{T_J}$, and $T_{jI(t)}$ its last choice.

The matching algorithm provides a final set of matches from the proposers' preference matrix PropPref($t$) and from the accepters' preference matrix AccPref($t$).

In the case of the Gale-Shapley matching algorithm, proposers advance on their corresponding row in PropPref($t$) and accepters check their corresponding row in AccPref($t$) for a possible better match, in successive rounds producing intermediate sets of matches until the last round producing the final set of matches.

For the targets which have obtained a final match (some targets may remain single), the Gale-Shapley algorithm ensures that the obtained final set of matches is "stable" in the following sense:
There are no pairs $(T_i, \overline{T_k})$ and $(T_j, \overline{T_l})$, with $i \neq j$ and $k \neq l$, for which $T_i$ prefers $\overline{T_l}$ to $\overline{T_k}$ AND $\overline{T_l}$ prefers $T_i$ to $T_j$, or, in other

words, for which $\text{Aff}_{p,\text{Th}}(T_i, \overline{T_l}) < \text{Aff}_{p,\text{Th}}(T_i, \overline{T_k})$ AND $\text{Aff}_{p,\text{Th}}(T_i, \overline{T_l}) < \text{Aff}_{p,\text{Th}}(T_j, \overline{T_l})$.

Examples of anti flicker filtering performed by the second block MD2 of the second processing means AFF, will be now described more in details.

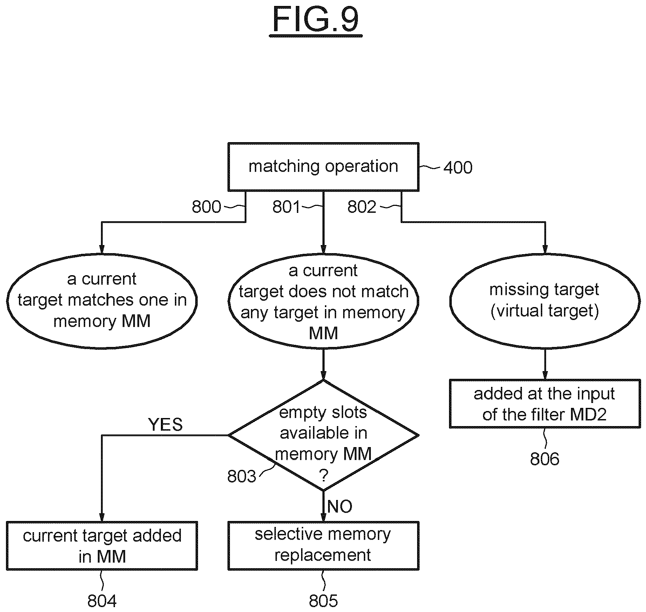

Three cases can occur (see figure 9):

- A current target matches one in the memory MM (step 800). This is a nominal case for the anti flicker filter MD2 of the second processing means AFF.
- A current target does not match any target in memory (step 801). This corresponds for example to an appearing target, or glitch... In such a case, this appearing target may be added to the memory MM, if empty slots are available (steps 803 and 804).

Otherwise, a selective memory replacement (step 805) of a stored target by this appearing target may be performed based on the confidence indicators.

- A previous target in memory is not matched in the current set of detected targets (step 802). This corresponds to a "Missing target" or a "virtual target. And this virtual target is added (step 806) at the input of the filter to "Fill the hole" for filtering.

The addition and replacement operations may be performed by the control means CTRLM (figure 1).

Concerning more particularly a missing target ("Virtual" target), there are several possible causes for a target in memory to be missing at some instant:

- The target actually disappeared from the scene: The filter MD2 of the second processing means AFF is thus advantageously as reactive as possible and discard this target as soon as possible from the memory. (Low Latency)
- The target is weak and is not detected from time to time by the pulse segmenter PS. The anti flicker filter MD2 advantageously keeps it (Stability).

To reach both goals (low latency and stability), one takes into account the past confidence of the target in memory.

More precisely, a "virtual" target is added to the filter inputs with a confidence that is:

very low (even below the PS threshold; even negative) if one was very confident on its past realization,
close to the previous confidence level in memory if it was low (close to the PS level)

There is an additional benefit: the filtering process is streamlined: no branching / special case to handle.

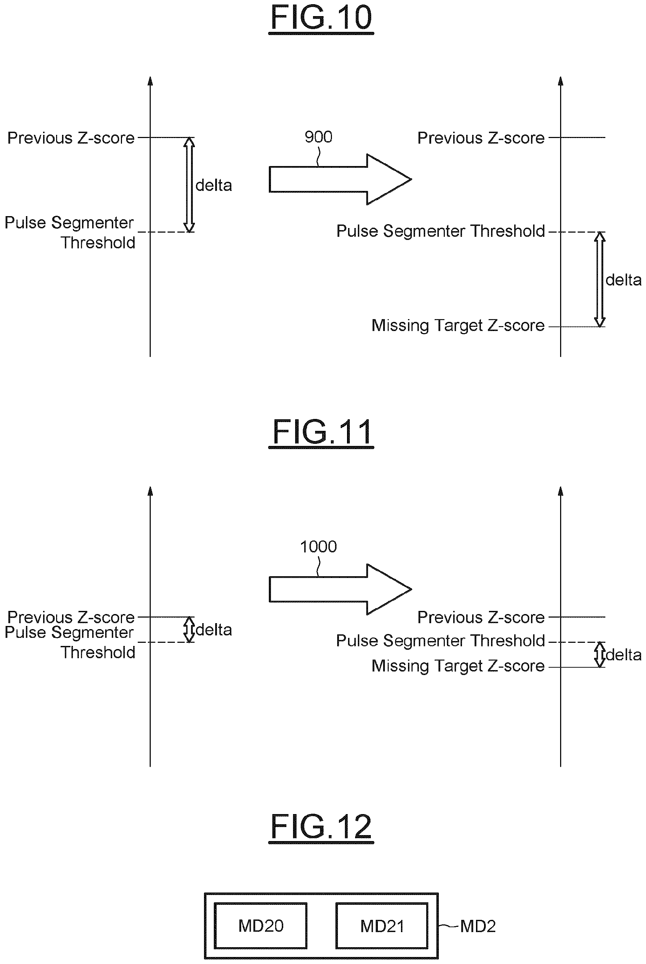

As illustrated in figure 10 an embodiment comprises "mirroring Z-score" (with or without offset).

More precisely, the value previous Z-score (determined as illustrated in figure 4) of the previous target which corresponds to a "Missing target" or a "virtual target, is above the pulse segmenter threshold with a difference equal to delta.

The Z-score given to the missing target (virtual target) is thus equal to the pulse segmenter threshold minus delta.

In other words, as explained above, in such a case the "virtual" target is added to the filter inputs with a missing Target Z-score and thus with a confidence that is very low because one was very confident on its past realization (previous Z-score well above the PS threshold, step 900).

For example, previous Z-score can be equal to 1000 (very high confidence), which results, with a typical PS threshold equal to 6.1, in a delta equal to 993.9 (1000 - 6.1) and a missing target Z-score equal to -987.8 (6.1 - 993.9).

Thus, added to the filter input, the virtual target exhibits a very low Z-score that will greatly influence the filtered confidence, making the target to disappear quickly

Another embodiment illustrated in figure 11 and including also "mirroring Z-score" (with or without offset), but with a value of delta smaller than the value of delta of figure 10.

In other words, as explained above, in such a case the "virtual" target is added to the filter inputs with a missing Target Z-score and thus with a confidence that is close to the previous confidence level in memory because it was low (close to the PS threshold, step 1000).

For example, previous Z-score can be equal to 6.5 (low confidence, close to the PS threshold), which results, with a typical PS threshold equal to 6.1, in a delta equal to 0.4 (6.5 - 6.1) and a missing target Z-score equal to 5.7 (6.1 - 0.4).

In such a case, added to the filter input, the virtual target exhibits a Z-score very close to the one of the memory MM, smoothing the target output (healing the flicker).

As illustrated diagrammatically on figure 12, the anti flicker filter MD2 may comprise an IIR (Infinite Impulse Response) filter MD20 and a FIR (Finite Impulse Response) filter MD21.

The IIR filter MD20 could be disabled in presence of missing target.

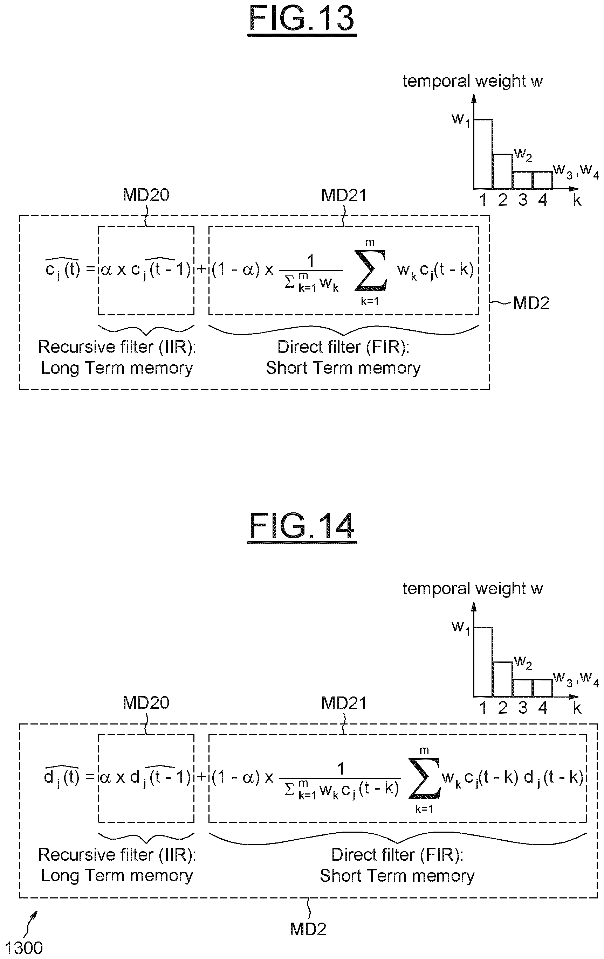

Figure 13 illustrates a weighted filter MD2 using a weighted average on the confidence indicator cj.

The confidences include potentially the mirrored one (for virtual target).

The filter MD2 includes the IIR filter MD20 which is here a recursive filter and the FIR filter MD21 which is here a direct filter.

The filtered confidence $\widehat{c_j(t)}$ is given by the formula:

$$\widehat{c_j(t)} = \alpha \times \widehat{c_j(t-1)} + (1-\alpha) \times \frac{1}{\sum_{k=1}^{m} w_k} \sum_{k=1}^{m} w_k c_j(t-k)$$

in which m is the number of coefficients of the filter and $w_k$ are the weights.

The direct filter provides a temporal direct average with weights having a decreasing importance over time. For example, $w_1$=4, $w_2$=2 and $w_3$=$w_4$=1

Figure 14 illustrates a double weighted filtering operation 1300 performed by thefilter MD2 using a double weighted average on the target characteristics: range,....

The confidences include potentially the mirrored one (for virtual target).

The filter MD2 includes the IIR filter MD20 which is here a recursive filter and the FIR filter MD21 which is here a direct filter.

The confidence direct average is based here on $c_j$(t-k) and includes potentially virtual target(s).

The filtered range $\widehat{d_j(t)}$ is given by the formula, in which only real past targets are taken into account:

$$\widehat{d_j(t)} = \alpha \times \widehat{d_j(t-1)} + (1-\alpha) \times \frac{1}{\sum_{k=1}^{m} w_k c_j(t-k)} \sum_{k=1}^{m} w_k c_j(t-k) \, d_j(t-k)$$

The direct filter provides a temporal direct average with weights having a decreasing importance over time. For example, $w_1$=4, $w_2$=2 and $w_3$=$w_4$=1.

Embodiments of the invention permit to obtain in particular the following results and advantages:

- drastically reducing the flicker at the output of the Histogram Pipe, for example reduction by around 90%,
- keeping the latency to a reasonable level, for example 2 frame delay (for appearance / disappearance) in the dark, 2 frame delay for appearance at 2kLux, 4 frame latency for disappearance in worst case,
- offering a tunable trade-off between the latency and the stability,
- handling smoothly multiple targets,
- helping to detect false long tail targets,
- no reduction of the spatial reduction.

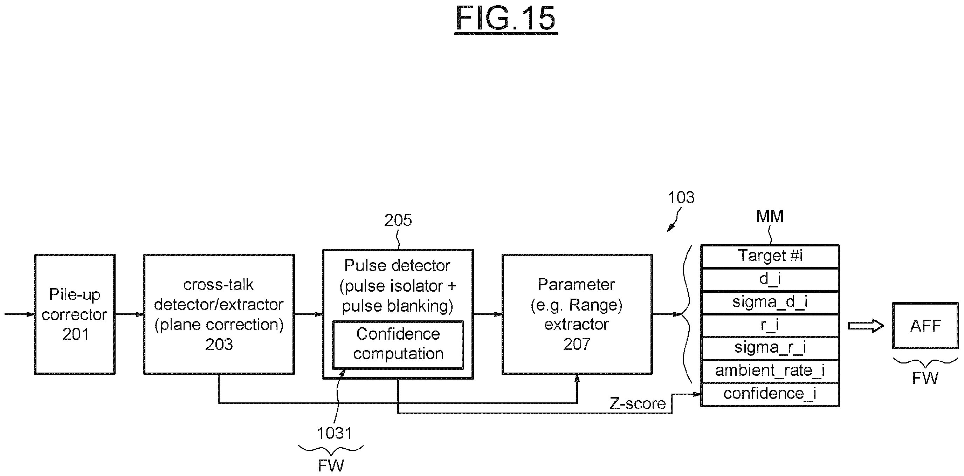

As indicated above and illustrated in figure 15, according to an advantageous implementation, the first module 1031 of the first processing means 103 and the second processing means AFF may be integrated in the firmware FW.

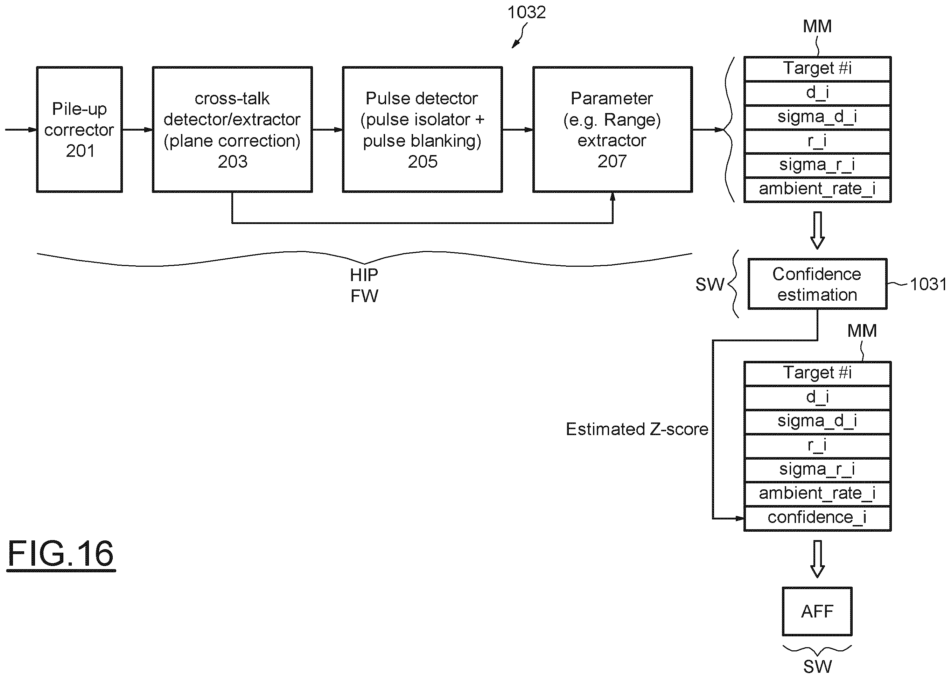

According to a variant illustrated in figure 16, the second module 1032 is integrated in the FW but the first module 1031 and the second processing means AFF are integrated in the software SW which allows a backward compatibility as the histogram pipe HIP is not modified.

**Claims**

1. Method, comprising

   - detecting from a first histogram signal (102) delivered by a sensor device (101), successive sets of targets (Target#i, Target#i', Target#i") at respective successive instants,
   - determining for a current set of current detected targets (Target#i, Target#i', Target#i"), a current histogram output, said current histogram output comprising for each current detected target of said current set, a current group of parameters (PRMi) stored in a memory (MM) including a confidence indicator (confidence_i) ,

- performing a matching operation (400) between said current set of detected targets (Target#i, Target#i', Target#i") and previous sets of detected targets (Target#j, Target#j', Target#j") stored in said memory, and
- performing a filtering operation (600) of at least one parameter of the current group of parameters of at least some of the current detected targets of the current set, on the basis of the result of the matching operation (600), said filtering operation being weighted on the basis of at least the confidence indicators of current and previous sets of detected targets.

2. Method according to claim 1, wherein the confidence indicator of a current detected target (Target#i) is based on a Z-score (Target Z-Score) of the target in the first histogram signal.

3. Method according to any one of the preceding claims, wherein a current group of parameters (PRMi) further includes a rate (r_i), an ambient rate (ambient_rate_i) and a distance (d_i).

4. Method according to any one of the preceding claims, wherein said matching operation (400) comprises using an affinity criterion (AFCR).

5. Method according to claim 4, wherein said affinity criterion (AFCR) comprises a condition based on distance.

6. Method according to claim 4 or 5, wherein said affinity criterion (AFCR) comprises a condition based on rate.

7. Method according to any one of claims 4 to 6, wherein said affinity criterion (AFCR) comprises a condition based on the confidence indicator.

8. Method according to any one of claims 4 to 7, wherein said affinity criterion (AFCR) comprises an affinity based distance matrix.

9. Method according to any one of the preceding claims, wherein a current detected target matches (800) one previous target stored in the memory at the end of the matching operation.

10. Method according to any one of the claims 1 to 8, wherein a current detected target does not match (801) any previous target stored in the memory at the end of the matching operation.

11. Method according to claim 10, wherein said current detected target is added (804) to the memory if empty slots are available.

12. Method according to claim 10, wherein a selective memory replacement is performed (805) based on the confidence indicators for storing said current detected target.

13. Method according to any one of claims 1 to 8, wherein a previous target in the memory is not matched in the current set of detected targets, and a new target, called virtual target, is added (806) to the input of the filtering operation with a new confidence indicator.

14. Method according to claim 13, wherein the new confidence indicator of the virtual target is very low if one was very confident on its corresponding previous target (900).

15. Method according to claim 13, wherein the new confidence indicator is close to the previous confidence indicator if said previous confidence indicator was low (1000).

16. Method according to any one of the preceding claims, comprising a double weighted filtering operation (1300) based on the target parameters and the confidence indicator.

17. Method according to any one of the preceding claims, wherein the sensor device (101) comprises a ToF device, in particular a dToF device.

FIG.1

EP 4 063 899 A1

# FIG.2

Target A
301

Target B
303

102

# FIG.3

Pile-up corrector 201

cross-talk detector/extractor (plane correction) 203

Pulse detector (pulse isolator + pulse blanking) 205

Parameter (e.g. Range) extractor 207

1032

EP 4 063 899 A1

# FIG.4

$$\text{Target Z-Score} = \frac{\text{PulseMean-A}_{est}}{\sqrt{\dfrac{A_{est}}{\text{PulseWidth}}}}$$

# FIG.5

EP 4 063 899 A1

# FIG.6

FW implementation

AFF outputs

Per zone

| Target #j" | | | | | |
|---|---|---|---|---|---|
| Target #j' | | out | | | |
| Target #j | | out | | | |
| t-1 | t-2 | t-3 | out | | |
| d_j | | | | | |
| sd_j | | | | | |
| r_j | | | | | |
| sr_j | | | | | |
| ar_j | | | | | |
| c_j | | | | | |

Targets Memory
(Per zone)

MM

MD2

Double Weighted Scoring
and
Double Weighted Averaging

600

temporal weight

time

✕ Confidence weight

AFF outputs

Per zone

| Target #j" |
|---|
| Target #j |
| d_i |
| sigma_d_i |
| r_i |
| sigma_r_i |
| ambient_rate_i |

EP 4 063 899 A1

# FIG.7

```
- Condition based on distance
                and / or
- Condition based on rate
                and / or                            ~AFCR
- Condition based on confidence indicator
                and / or
- Affinity based distance matrix
```

# FIG.8

$$Aff_{p,Th}(t) = \begin{bmatrix} Aff_{p,Th}(T_1,\overline{T_1}) & \cdots & Aff_{p,Th}(T_1,\overline{T_{J(t)}}) \\ \vdots & Aff_{p,Th}(T_i,\overline{T_j}) & \vdots \\ Aff_{p,Th}(T_{1(t)},\overline{T_1}) & \cdots & Aff_{p,Th}(T_{1(t)},\overline{T_{J(t)}}) \end{bmatrix}$$

Form the preference list of $T_i$ by sorting $\{\overline{T_1},\ldots,\overline{T_{J(t)}}\}$
in ascending order of $\{Aff_{p,Th}(T_i,\overline{T_1}),\ldots,Aff_{p,Th}(T_i,\overline{T_{J(t)}})\}$
Thus, $\overline{T_{i_1}}$ is the first choice of $T_i$, and $\overline{T_{i_{U(t)}}}$ its last choice.

Form the preference list of $\overline{T_j}$ by sorting $\{T_1,\ldots,T_{I(t)}\}$
in ascending order of $\{Aff_{p,Th}(T_1,\overline{T_j}),\ldots,Aff_{p,Th}(T_{I(t)},\overline{T_j})\}$
Thus, $T_{j_1}$ is the first choice of $\overline{T_j}$, and $T_{j_{I(t)}}$ its last choice.

$$PropPref(t) = \begin{matrix} T_1 Pref\ List \\ T_i Pref\ List \\ T_{I(t)} Pref\ List \end{matrix} \begin{bmatrix} \overline{T_{1_i}} & \cdots & \overline{T_{1_{J(t)}}} \\ \vdots & \overline{T_{i_j}} & \vdots \\ \overline{T_{I(t)_1}} & \cdots & \overline{T_{1(t)_{J(t)}}} \end{bmatrix}$$

$$AccPref(t) = \begin{matrix} \overline{T_1}\ Pref\ List \\ \overline{T_j} Pref\ List \\ \overline{T_{J(t)}} Pref\ List \end{matrix} \begin{bmatrix} T_{1_1} & \cdots & T_{1_{I(t)}} \\ \vdots & T_{j_i} & \vdots \\ T_{J(t)_1} & \cdots & T_{J(t)_{I(t)}} \end{bmatrix}$$

EP 4 063 899 A1

# FIG.9

```
                    ┌─────────────────────────┐
                    │   matching operation    ├─~400
                    └──┬──────────┬────────┬───┘
            800~┘    801~┘       802~┘
      ┌────────────┘      ┌──────┘         └──────────┐
      ▼                   ▼                           ▼
 ╭───────────╮    ╭──────────────────╮         ╭───────────────╮
 │ a current │    │   a current      │         │ missing target│
 │target     │    │target does not   │         │(virtual target)│
 │matches one│    │match any target  │         ╰───────┬───────╯
 │in memory  │    │in memory MM      │                 │
 │MM         │    ╰────────┬─────────╯                 ▼
 ╰───────────╯             │                  ┌─────────────────┐
                           ▼                  │ added at the input│
                      ◇─────────◇             │ of the filter MD2 │
            YES      ╱empty slots ╲            └────────┬────────┘
       ┌────────────╱ available in ╲                    )
       │            ╲ memory MM     ╱                   806
       │         803~╲     ?       ╱
       ▼             ◇────┬────────◇
 ┌──────────────┐         │NO
 │current target│         ▼
 │added in MM   │  ┌──────────────┐
 └──────┬───────┘  │selective     │
        )          │memory        │
        804        │replacement   │
                   └──────┬───────┘
                          )
                          805
```

# FIG.10

900

Previous Z-score

delta

Pulse Segmenter
Threshold

Previous Z-score

Pulse Segmenter Threshold

delta

Missing Target Z-score

# FIG.11

1000

Previous Z-score

delta

Pulse Segmenter
Threshold

Previous Z-score

Pulse Segmenter Threshold

delta

Missing Target Z-score

# FIG.12

| MD20 | MD21 | —MD2 |

# FIG.13

temporal weight w

$$\widehat{c_j(t)} = \underbrace{\alpha \times \widehat{c_j(t-1)}}_{\substack{\text{Recursive filter (IIR):} \\ \text{Long Term memory}}} + \underbrace{(1-\alpha) \times \frac{1}{\sum_{k=1}^{m} w_k} \sum_{k=1}^{m} w_k c_j(t-k)}_{\substack{\text{Direct filter (FIR):} \\ \text{Short Term memory}}}$$

MD20      MD21      MD2

# FIG.14

temporal weight w

$$\widehat{d_j(t)} = \underbrace{\alpha \times \widehat{d_j(t-1)}}_{\substack{\text{Recursive filter (IIR):} \\ \text{Long Term memory}}} + \underbrace{(1-\alpha) \times \frac{1}{\sum_{k=1}^{m} w_k c_j(t-k)} \sum_{k=1}^{m} w_k c_j(t-k)\, d_j(t-k)}_{\substack{\text{Direct filter (FIR):} \\ \text{Short Term memory}}}$$

MD20      MD21

1300      MD2

## FIG.15

FIG.16

Europäisches
Patentamt

European
Patent Office

Office européen
des brevets

## EUROPEAN SEARCH REPORT

**Application Number**

EP 22 16 1244

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 660 135 A2 (TRW INC [US]) 28 June 1995 (1995-06-28) * abstract; figures 1, 15, 25, 24, 28 * * page 2, lines 5, 6 * * page 10, lines 16, 17 * * page 11, line 34 – line 41 * * page 12, line 46 – page 13, line 20 * ----- | 1-17 | INV. G01S7/48 G01S7/4865 G01S7/487 G01S17/04 G01S17/66 ADD. |
| A | EP 3 690 475 A1 (NXP BV [NL]) 5 August 2020 (2020-08-05) * abstract; figures 2, 3, 5 * * paragraph [0007] – paragraph [0014] * * paragraph [0043] – paragraph [0057] * * paragraphs [0059], [0060] * ----- | 1-17 | G01S7/497 |
| A,D | US 2018/253404 A1 (MOORE JOHN KEVIN [GB] ET AL) 6 September 2018 (2018-09-06) * figures 1A, 1B, 3 * * paragraph [0005] – paragraph [0007] * * paragraph [0054] – paragraph [0071] * ----- | 1-17 | |

| | |
|---|---|
| | TECHNICAL FIELDS SEARCHED (IPC) |
| | G01S |

The present search report has been drawn up for all claims

| Place of search | Date of completion of the search | Examiner |
|---|---|---|
| Munich | 20 July 2022 | Knoll, Bernhard |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
........................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 22 16 1244

This annex lists the patent family members relating to the patent documents cited in the above-mentioned European search report.
The members are as contained in the European Patent Office EDP file on
The European Patent Office is in no way liable for these particulars which are merely given for the purpose of information.

20-07-2022

| Patent document cited in search report | | Publication date | Patent family member(s) | | Publication date |
|---|---|---|---|---|---|
| EP 0660135 | A2 | 28-06-1995 | EP 0660135 | A2 | 28-06-1995 |
| | | | JP 2978409 | B2 | 15-11-1999 |
| | | | JP H07239382 | A | 12-09-1995 |
| | | | US 5508706 | A | 16-04-1996 |
| EP 3690475 | A1 | 05-08-2020 | CN 111538020 | A | 14-08-2020 |
| | | | EP 3690475 | A1 | 05-08-2020 |
| | | | US 2020233066 | A1 | 23-07-2020 |
| US 2018253404 | A1 | 06-09-2018 | US 2018253404 | A1 | 06-09-2018 |
| | | | US 2021382964 | A1 | 09-12-2021 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 20180253404 A1